# EUROPEAN PATENT APPLICATION

(11) **EP 4 640 944 A1**
(43) Date of publication of application: **29.10.2025**
(21) Application number: 24171498.9
(22) Date of filing: 22.04.2024
(51) Int. Cl.: D21F 11/04, B29C 65/08, B29C 65/00, B29K 1/00, B29K 311/12

(54) **ULTRASONIC SEALING OF PAPERBOARD**

(71) Applicant: Billerud Aktiebolag (publ), 169 27 Solna (SE)
(72) Inventor: LARSSON, Johan A., 805 98 Gävle (SE)
(74) Representative: Kransell & Wennborg KB

(57) **Abstract**

The present disclosure provides a method of ultrasonic sealing of a multi-ply paperboard, wherein the method comprises the following steps:
a) providing a multi-ply paperboard comprising a first ply and a second ply, wherein the second ply comprises at least 20 wt% unbleached pulp by dry weight;
b) wetting part of the paperboard with water; and
c) sealing a wetted portion of the paperboard from step b) to a paperboard surface by ultrasonic sealing.

## Description

### TECHNICAL FIELD

The present disclosure relates to the field of ultrasonic sealing of paperboard.

### BACKGROUND

There is a constant strive to reduce the usage of plastic materials in packaging. One route is to use paperboard-based packaging. To form a package from paperboard, a sealing needs to be formed between surfaces of paperboard.

Commonly, heat-sealing is used to join two surfaces of paper or paperboard. In such case, a particular coating made of a heat-sealable polymer such as polyethylene is typically applied.

One alternative technique to heat-sealing is ultrasonic sealing, also known as ultrasonic joining. An example of a device used for ultrasonic sealing of paper is described in US 9,399,330 B2 by Syntegon Technology GmbH.

However, not all paperboards are suitable for ultrasonic sealing.

### SUMMARY

The present disclosure provides for a method of expanding the use of ultrasonic sealing of paperboard.

Accordingly, the present disclosure provides a method of ultrasonic sealing of a multi-ply paperboard, wherein the method comprises the following steps:
a) providing a multi-ply paperboard comprising a first ply and a second ply, wherein the second ply comprises at least 20 wt% unbleached pulp by dry weight;
b) wetting part of the paperboard with water; and
c) sealing a wetted portion of the paperboard from step b) to a paperboard surface by ultrasonic sealing.

The present disclosure further provides a method of forming a sealed package or container as well as a formed package or container comprising the ultrasonically sealed paperboard.

In the present disclosure, the realized that the result of the above-mentioned ultrasonic sealing process can be improved by careful selection of the composition of the multiply paperboard. By the method according to the present disclosure, multiply paperboards being particularly suitable for ultrasonic sealing are sealed to create a strong seal.

### DETAILED DESCRIPTION

As a first aspect of the present disclosure there is provided a method of ultrasonic sealing of a multi-ply paperboard, wherein the method comprises the following steps:
a) providing a multi-ply paperboard comprising a first ply and a second ply, wherein the second ply comprises at least 20 wt% unbleached pulp by dry weight;
b) wetting part of the paperboard with water; and
c) sealing a wetted portion of the paperboard from step b) to a paperboard surface by ultrasonic sealing.

Ultrasonic sealing is the same as ultrasonic joining as well as ultrasonic welding. A suitable device as well as the technique itself is described in detail in US 9,399,335 B2 by Syntegon Technology GmbH. The paperboard is introduced in a gap between a sonotrode and an anvil and by causing the sonotrode to oscillate ultrasonically the paperboard is ultrasonically sealed.

The portion of the multi-ply paperboard to be sealed is wetted with water to moisturize the surface of the paperboard. The water is needed to form a strong seal in the ultrasonic sealing. Without being bound to any theory it is believed that the water penetrates the surface of the paperboard and softens the fibres so that they can re-form when the ultrasonic sealing is conducted. For the avoidance of doubt, the wetted part may be greater than the portion that is subsequently sealed. It is, however, preferred not to wet a bigger part of the paperboard than needed for the formation of the seal as the wetting can deteriorate the surface of the paperboard that will be visible to consumers. Typically, the paperboard surface of step c) is also wetted.

The paperboard may be sealed to itself in step c). In such case, a package or container can be produced from a paperboard by folding or rolling the paperboard followed by ultrasonic sealing. Alternatively, the paperboard is sealed to a second paperboard in step c). In such case, a package or container can be produced without the need for folding any of the paperboards. Moreover, production of a package being of different shapes on top and bottom side is facilitated.

The second ply comprises at least 20 wt% unbleached pulp by dry weight. The inventors have realized that if such amount of unbleached pulp is included in the second ply, the seal strength of the seal produced with ultrasonic sealing is improved.

Typically, the second ply comprises chemical pulp and 20-70 wt% unbleached chemithermomechanical pulp (CTMP) by dry weight.

CTMP is a bulky mechanical pulp. It is beneficial to include CTMP in a ply as it decreases the density, i.e. increases the bulk, of the paperboard. A high bulk is preferred as less fibres are used per gram of paperboard. Within the content of the present disclosure, CTMP also includes high-temperature chemithermomechanical pulp (HT-CTMP). When producing HT-CTMP a higher preheating temperature, typically above 170 °C, is used to produce the pulp. CTMP can be produced from various sources including both softwood, such as spruce, pine, hemlock and balsam fir, and hardwood, such as birch, eucalyptus and maple. The second ply comprises 20-70 wt% unbleached CTMP by dry weight. The inventors have realized that if unbleached CTMP is included in the second ply, the seal strength of the seal produced with ultrasonic sealing is particularly improved. Without being bound to any theory, it is believed that the composition of the unbleached CTMP where both lignin and hemicelluloses are present is beneficial for provision of a strong seal. Typically, the second ply comprises 25-60 wt%, such as 30-50 wt% unbleached CTMP by dry weight. The CTMP is typically virgin pulp, but may also be recycled fibers.

Chemical pulp is a strong type of pulp as it has a higher content of cellulose compared with mechanical pulp. The second ply typically comprises 15-70% by dry weight chemical pulp, such as 20-65 wt% by dry weight of chemical pulp. A preferred type of chemical pulp is kraft pulp. In kraft pulping the wood chips are cooked with a mixture of sodium hydroxide and sodium sulfide, known as white liquor, in a large pressure vessel. This process, called "digesting," breaks down the lignin that binds cellulose fibers together without degrading the cellulose itself. After cooking, the mixture is washed, and the spent cooking chemicals along with dissolved lignin (now called black liquor) are separated from the pulp. Kraft pulp can be produced from various sources including both softwood, such as spruce, pine, hemlock and balsam fir, and hardwood, such as birch and eucalyptus. The kraft pulp may be bleached or unbleached. Preferably, the first ply comprises at least 50 wt% by dry weight kraft pulp, such as at least 70 wt% by dry weight kraft pulp, such as at least 85% by dry weight kraft pulp. The kraft pulp is typically virgin pulp, but may also at least partly be provided as recycled fibers. Typically, the first ply forms a top ply of the multi-ply paperboard. In such case, at least part of the kraft pulp in the first ply is typically hardwood kraft pulp. In one embodiment, all kraft pulp in the first ply is hardwood kraft pulp. Alternatively, the first ply contains a mixture of hardwood kraft pulp and softwood kraft pulp. In such case, it is typically more hardwood kraft pulp than softwood kraft pulp, such as 55-95 wt% by dry weight of hardwood kraft pulp and 5-45 wt% by dry weight softwood kraft pulp of the kraft pulp mixture. In case kraft pulp is added to the first ply, this kraft pulp is typically bleached. In such case, a multi-ply paperboard combining visual appearance with seal strength. Moreover, surprisingly, the inventors have realized that even if the first ply is made from bleached pulp, the effect of provision of the desired seal strength is obtained also in case the wetted portion is part of the first ply.

The chemical pulp may be added at least partly as broke pulp. Typically, for the second ply, at least part of the chemical pulp is added as broke pulp. Broke pulp is formed from trimmings and/or produced, but damaged, board, and, consequently the broke pulp has essentially the same pulp composition as the paperboard.

Typically, the pulps are market pulps. One or more of the pulps may also be never-dried pulps.

The multi-ply paperboard can for example be used as a containerboard, such as linerboard, or a cartonboard, such as a liquid packaging board (LPB) or a folding boxboard (FBB).

The multi-ply paperboard contains two or more plies. In case of two plies, the first ply is a top ply and the second ply is a back ply.

Alternatively, the multi-ply paperboard contains at least three plies; a top ply, a back ply and one or more middle plies. In such case, the multi-ply paperboard further comprises a third ply comprising at least 50 wt% by dry weight of kraft pulp, and wherein the first ply is a top ply, the second ply is a middle ply and the third ply is a back ply. In this case, the kraft pulp of the third ply is typically unbleached. Typically, the third ply comprises at least 70 wt% by dry weight kraft pulp, such as at least 85% by dry weight kraft pulp. The kraft pulp also of the third ply is typically virgin pulp, but may also at least partly be provided as recycled fibers.

The wetted portion can be at least part of the top ply and/or the back ply of the multi-ply paperboard. Likewise, the paperboard surface in step c) can be at least part of a back ply or a top ply. Thereby, the sealing can be made in any of three constellations top ply to top ply, back ply to back ply, or top ply to back ply.

The second ply may further comprise microfibrillated cellulose (MFC). Typically, in such case the content of MFC in the second ply is 0.1-5 wt% by dry weight, such as 0.3-4 wt% by dry weight.

In the context of the present disclosure, MFC means nano-scale cellulose particle fibres or fibrils with at least one dimension less than 100 nm. MFC comprises partly or totally fibrillated cellulose or lignocellulose fibres. The liberated fibrils have a diameter less than 100 nm, whereas the actual fibril diameter or particle size distribution and/or aspect ratio (length/width) depends on the source and the manufacturing methods. The smallest fibril is called elementary fibril and has a diameter of approximately 2-4 nm, while it is common that the aggregated form of the elementary fibrils, also defined as microfibril is the main product that is obtained when making MFC e.g. by using an extended refining process or a pressure-drop disintegration process. Depending on the source and the manufacturing process, the length of the fibrils can vary from around 1 to more than 10 micrometers.

There are different synonyms for MFC such as cellulose microfibrils, fibrillated cellulose, nanofibrillated cellulose (NFC), fibril aggregates, nanoscale cellulose fibrils, cellulose nanofibres, cellulose nanofibrils (CNF), cellulose microfibres (CMF), cellulose fibrils, microfibrillar cellulose, microfibril aggregrates and cellulose microfibril aggregates. MFC can also be characterized by various physical or physical-chemical properties such as large surface area or its ability to form a gel-like material at low solids content (1-5 wt.%) when dispersed in water. The cellulose fibre is preferably fibrillated to such an extent that the final specific surface area of the formed MFC is from about 1 to about 200 m²/g, or more preferably 10-150 m²/g when determined for a freeze-dried material with the BET method (Brunauer, Stephen, Paul Hugh Emmett, and Edward Teller. "Adsorption of gases in multimolecular layers." Journal of the American chemical society 60.2 (1938): 309-319.). Nitrogen (N2) gas adsorption isotherms are recorded using an ASAP 2020 (Micromeritics, USA) instrument. Measurements are performed at liquid nitrogen temperatures (i.e., 77 K), and the specific surface areas of the samples were obtained from the isotherms using the BET method. After fibrillation the Schopper Riegler (SR) is preferably above 90 as measured according to the standard ISO 5267-1:1999.

Various methods exist to make MFC, such as single or multiple pass refining, pre-hydrolysis followed by refining or high shear disintegration or liberation of fibrils. One or several pre-treatment step(s) may be required in order to make MFC manufacturing both energy efficient and sustainable. The cellulose fibres of the pulp to be supplied may thus be pre-treated enzymatically or chemically, for example to hydrolyse or swell fibre or reduce the quantity of hemicellulose or lignin.

The nanofibrillar cellulose may contain some hemicelluloses; the amount is dependent on factors such as plant source and pulping process. Mechanical disintegration of the pre-treated fibres, e.g. hydrolysed, pre-swelled, or oxidized cellulose rawmaterial is carried out with suitable equipment such as a refiner, grinder, homogenizer, collider, friction grinder, ultrasound sonicator, fluidizer such as microfluidizer, macrofluidizer or fluidizer-type homogenizer. Depending on the MFC manufacturing method, the product might also contain fines or e.g. other chemicals present in wood fibres or in papermaking process. The product might also contain various amounts of micron size fibre particles that have not been efficiently fibrillated. MFC is produced from wood cellulose fibres, both from hardwood or softwood fibres. It can also be made from, agricultural fibres such as wheat straw pulp, bamboo, bagasse, or other non-wood fibre sources. It is preferably made from pulp of virgin fibre, e.g. mechanical, chemical and/or thermomechanical pulps, preferably never-dried fibres. It can also be made from broke or recycled paper.

The above described definition of MFC includes, but is not limited to, the proposed TAPPI standard WI 3021 on cellulose nanofibril (CNF) defining a cellulose nanofibre material containing multiple elementary fibrils with both crystalline and amorphous regions, having a high aspect ratio with width of 5-30nm and aspect ratio usually greater than 50.

The paperboard may be coated. Typically in such case, the coating is a dispersion coating containing a binder being a latex. Typically, the latex is styrene-butadiene (SB) latex, styrene-acrylate (SA) latex, ethylene acrylic acid (EAA) latex, vinyl acetate acrylate copolymer (VAcA) latex, acrylic latex, ethylene vinyl acetate (EVA) latex or mixtures thereof. The latex can be biobased, i.e. derived from biomass, such as biobased styrene-acrylate or styrene-butadiene latex. Biobased latex can provide similar performance and provides improved carbon footprint. In addition to the latex, the dispersion coating may also comprise a co-binder, such as polyvinyl alcohol (PVOH). Typical addition levels of the co-binder is in such case less than 2 pph. The co-binder is added for improved film formation of the coating but it is not necessary to add for provision of the coating. Alternatively, the coating contains a primary binder that is a water-soluble polymer, such as polyvinyl alcohol (PVOH), starch or mixtures thereof.

In any case, within the present disclosure a binder is meant latex or water-soluble polymer. The term "latex" as used herein refers to an aqueous suspension of polymer particles, which can be natural polymers, synthetic polymers, synthetic polymers derived from biomasses or combination thereof. Water-soluble polymers are those polymers that forms solutions instead of dispersions in an aqueous solvent. Accordingly, a dispersion coating formed from a latex is a coating produced from an aqueous dispersion of polymeric particles. After application, the particles form a solid coating after drying.

The coating layers may be applied by the use of roller coating, spray coating, curtain, blade coating, slot coating, immersion coating, gravure roll coating, reverse direct gravure coating, rod coating, soft-tip blade coating and/or combinations thereof. The coating can be produced from one or several coating layers. In the latter case, the composition of each layer may be the same or varied. For the avoidance of doubt, the composition referred to of the coating is the composition of the coating as a whole independently of if there are several coating layers and if these have varied compositions within each layer. An example of a varied composition is where the dispersion coating layer consists of a base coat layer having a certain composition beneficial for covering the surface of the uncoated paperboard and on top of the base coat layer is arranged a top coat layer having a certain composition beneficial for printing and/or barrier properties. Typically, the outer side of a paperboard aimed at being visible to a user is provided more coating layers than the inner side of the paper or paperboard.

If the paperboard is coated, the coating may in addition to binder comprise pigments. The pigments are typically selected from calcium carbonate, talc, clay, such as kaolin clay and/or montmorillonite (MMT), and mixtures thereof. In such case, the dry weight ratio of binder to pigment is typically within the range of 0:100 to 200:100, such as 5:100 to 200:100, such as 7:100 to 150:100, such as 7:100 to 100:100. A higher binder to pigment ratio is beneficial for barrier properties, whereas a lower binder to pigment ratio is beneficial for printing properties and appearance. For the avoidance of doubt, the binder to pigment ratio for the coating is calculated based on the whole coating irrespectively of if it was provided as one or several coating layers.

Preferably, the fibres of the paperboard are exclusively cellulose fibres. If synthetic fibres, such as polyester fibres, are used to form part of the paper or paperboard, the environmental impact of the paper is increased which is a disadvantage. Also the repulpability as well as recyclability are impaired. Typically, the cellulose fibres are unmodified, i.e. used as is when provided from pulping. Thereby no chemical moieties have been introduced, e.g. by grafting, to the cellulose fibres. Accordingly, the fibres of the paperboard are preferably exclusively unmodified cellulose fibres. Similarly, it is preferred that no extruded or laminated plastic layer is provided on the part of the paper or paperboard provided in step a) that is to be wetted and sealed.

The seal strength of the sealing is typically at least 2.5 N, such as at least 3.0 N, such as at least 3.5 N measured according to ASTM F88 on a 15 mm test strip with unsupported 90 degree angle at a speed of 100mm/min. The seal strength is the tensile strength produced in the joining point in N using a constant rate of elongation of 100 mm/min.

The density of the paperboard measured according to ISO 534:2011 may be 600-900 kg/m³, such as 600-800 kg/m³. Such density is beneficial for provision of paperboard having desirable mechanical stability.

Typically, the grammage measured according to ISO 536:2020 of the paperboard is at least 110 g/m2, such as 110-500 g/m². As an example of paperboards in the lower end of the range are certain types of linerboards, being paperboards, having a grammage of about 120 g/m².

Typically, the internal bond strength, Scott Bond, according to Tappi T 569 Scott type of the paperboard is at least 110 J/m², such as at least 140 J/m², such as at least 160 J/m².

As a second aspect of the present disclosure there is provided use of a paperboard in ultrasonic sealing, wherein the paperboard comprises a first ply and a second ply, wherein the second ply comprises chemical pulp and 20-70 wt% unbleached chemithermomechanical pulp (CTMP) by dry weight.

The examples and embodiments discussed above in connection to the first aspect apply to the second aspect *mutatis mutandis.*

As a third aspect of the present disclosure there is provided a method of forming a sealed package or container, wherein the method comprises the following steps:
i. providing a multi-ply paperboard comprising a first ply and a second ply, wherein the second ply comprises chemical pulp and at least 20 wt% unbleached pulp by dry weight;
ii. forming a package or container by folding the paperboard;
iii. wetting part of the first ply of the paperboard with water; and
iv. sealing the wetted part to a paperboard surface by ultrasonic sealing.

The package or container may comprise a sealing and a product within the package or container, wherein the sealing is arranged so that a product is sealed within the package or container. In such embodiment, the product is enclosed inside the sealed package independently on which direction the package is arranged in. Example of such package is a closed sealed pouch sealed all around the product. Alternatively, the package or container is folded around the product and the open edges being sealed. In yet another alternative, the paperboard is sealed and thereafter folded followed by provision of the product to be contained therein and final sealing of the package or container.

An example of a package is a tube. In such case, a coated paperboard is provided and rolled and wetted. Thereafter the roll is sealed longitudinally and a tube lid portion is provided in one of the open ends leaving only one end open. In a following step the product is inserted into the package through the open end, which is subsequently sealed by wetting and ultrasonic sealing and thereby forming a tube.

Yet another example of a package is a folded paperboard box. In such case a paperboard blank is provided and the blank is formed by folding into a box. Subsequently, the box is sealed by wetting followed by ultrasonic sealing. Alternatively, the blank is wetted prior to folding into a box and thereafter sealed directly.

Depending on the type of package or container to be formed, steps ii. and iii. Can be conducted in the order of forming a package or container followed by wetting, i.e. step ii. prior to step iii. Alternatively, the wetting can be conducted first followed by folding, i.e. step iii. Prior to step ii.

In an alternative embodiment, the package or container comprises a sealing arranged so that the package or container is partly open so that a product can be inserted and removed without breaking the sealing or the package or container.

The examples and embodiments discussed above in connection to the first and second aspect aspect apply to the third aspect *mutatis mutandis.*

As a fourth aspect of the present disclosure, there is provided a package or container comprising the sealed paperboard according to the first aspect of the present disclosure.

Typically, such package or container does not contain any extruded or laminated plastic layer, and thereby the repulpability is facilitated.

The examples and embodiments discussed above in connection to the first, second and third aspects apply to the fourth aspect *mutatis mutandis.*

### EXAMPLES

Two paperboards were evaluated. No synthetic fibres were used in the paperboards. The paperboards were wetted with water (8 µl) on an area of 5×15 mm and sealed using ultrasonic joining by the device described in US 9,399,330 B2 at a pressure of 2-5 bar for a joining time of 150-600 msec.

Moreover, the fibre tear was evaluated. Fibre tear is a measure of how strong the seal is. If no fibre tear is obtained, the seal has failed within the seal itself leaving the papers intact, a so-called adhesive failure. On the other hand, if the seal is stronger than the paperboard, the rupture will occur within the paper in a so-called cohesive failure. In the latter case fibres are visibly torn out, which is referred to as fibre tear. Hence, the stronger the seal, the more fibre tear is shown.

Paperboard 1 has a grammage of 220 g/m² and consists of a multiply board having a top ply, a back ply and two middle plies. The fibre composition based on dry weight of respective ply was the following. The top ply was made from 100 wt% bleached hardwood kraft pulp (HW kraft) and the back ply was made from 80 wt% bleached HW kraft and 20 % bleached softwood kraft pulp (SW kraft). The first middle ply arranged between the top ply and a second middle ply was made from 42 wt% bleached CTMP, 56 wt% broke pulp and 2 wt% MFC. The second middle ply arranged between the first middle ply and the back ply was made from 50wt% bleached CTMP, 48 wt% broke pulp and 2 wt% MFC. Broke pulp is formed from trimmings and/or produced, but damaged, board, and, consequently the broke pulp has essentially the same pulp composition as the paperboard. The paperboard was coated on the top ply as well as on the back ply.

Paperboard 2 has a grammage of 245 g/m² and consists of a multiply board having a top ply, a back ply and two middle plies. The fibre composition based on dry weight of respective ply was the following. The top ply was made from 100 wt% bleached HW kraft and the back ply was made from 100 wt% unbleached SW kraft. The first middle ply arranged between the top ply and a second middle ply was made from 40 wt% unbleached CTMP and 60 wt% broke pulp. The second middle ply arranged between the first middle ply and the back ply was made from 34 wt% unbleached CTMP, 45 wt% broke pulp, 20 wt% unbleached SW kraft and 1 wt% MFC. The paperboard was coated on the top ply and uncoated on the back ply.

The specification of the coatings of the paperboards are shown below in Table 1. For each paperboard, the composition of base coat and top coat on the top side together with respective grammage as well as composition of coating on the back side (if any) and with which grammage is presented. For the avoidance of doubt, the grammages of the coating(s) on the top side refers to the base coat and top coat in that order.

**Table 1. Specification of the coatings of the paperboards.**

| | Top side | | | Back side | |
|---|---|---|---|---|---|
| | Base coat (pph) | Top coat (pph) | Grammage (g/m²) | Coating (pph) | Grammage (g/m²) |
| Paperboard 1 | Kaolin: 5 | Kaolin: 25 | 13 + 10 | Kaolin: 5 | 7 |
| | CC: 95 | CC: 75 | | CC: 95 | |
| | SB-latex: 16 | SB-latex: 16 | | SB-latex: 16 | |
| | PVOH: 0.85 | PVOH: 0.85 | | PVOH: 0.85 | |
| Paperboard 2 | Kaolin: 5 | Kaolin: 25 | 13 + 10 | Uncoated | 0 |
| | CC: 5 | CC: 75 | | | |
| | SB-latex: 16 | SB-latex: 16 | | | |
| | PVOH: 0.5 | | | | |

The paperboards and papers were thereafter evaluated with respect to how strong seal that could be produced. Two paperboards of each type were sealed together. The test orientation of the sealing was varied and seals were produced between top sides (T/T), between a top side and a back side (T/B) or between two back sides (B/B).

The following properties were evaluated and with each unit in parenthesis following respective property. Seal strength (N) was evaluated according to ASTM F88 on 15 mm test strips, fibre tear (%) using visual inspection and grammage (g/m²) according to ISO 536:2020.

All evaluated properties are listed together with corresponding test method in Table 2 below.

**Table 2. Seal properties of sealed paperboards.**

| | Test orientation | Force (N) | Fibre tear (%) |
|---|---|---|---|
| Paperboard 1 | T/T | 1.4 | 100 |
| | T/B | 2.6 | 100 |
| | B/B | 3.0 | 100 |
| | | | |
| Paperboard 2 | T/T | 3.9 | 100 |
| | T/B | 4.4 | 100 |
| | B/B | 5.3 | 100 |

For paperboard 2, the highest seal strength is obtained when two uncoated surfaces are sealed together, i.e. a total coat weight in the seal of 0 g/m². Paperboard 1 also being coated on the backside, follows the same trend.

Surprisingly, the inventors found that the seal strength of paperboard 2 outperforms paperboard 1 for all test configurations. Even when tested top to top (T/T) having the two coated surfaces against each the formed seal is stronger than when paperboard 1 was sealed uncoated (B/B).

The inventors thereby realized that for multiply paperboards, coated as well as uncoated, the key to obtain a strong seal by ultrasonic sealing is unbleached pulp and the provision of unbleached in at least one ply, which even can be a ply underneath the top ply. That is in a middle ply for a paperboard having a top ply, a back ply and one, or several, middle plies or in the back ply for a two-ply paperboard.

## Claims

1. A method of ultrasonic sealing of a multi-ply paperboard, wherein the method comprises the following steps:
a) providing a multi-ply paperboard comprising a first ply and a second ply, wherein the second ply comprises at least 20 wt% unbleached pulp by dry weight;
b) wetting part of the paperboard with water; and
c) sealing a wetted portion of the paperboard from step b) to a paperboard surface by ultrasonic sealing.

2. The method of claim 1, wherein the second ply comprises chemical pulp and 20-70 wt% unbleached chemithermomechanical pulp (CTMP) by dry weight.

3. The method of claim 1 or 2, wherein the paperboard is sealed to itself in step c).

4. The method of claim 1 or 2, wherein the paperboard is sealed to a second paperboard in step c).

5. The method of any one of the preceding claims, wherein the first ply comprises at least 50 wt% by dry weight kraft pulp, such as at least 70 wt% by dry weight kraft pulp, such as at least 85% by dry weight kraft pulp.

6. The method of any one of the claims 2-5, wherein the second ply comprises 25-60 wt%, such as 30-50 wt% unbleached CTMP by dry weight.

7. The method of any one of the claims 2-6, wherein the second ply, comprises 15-70% by dry weight chemical pulp, such as 20-65 wt% by dry weight of chemical pulp.

8. The method of any one of the preceding claims, wherein the paperboard further comprises a third ply comprising at least 50 wt% by dry weight of kraft pulp, and wherein the first ply is a top ply, the second ply is a middle ply and the third ply is a back ply.

9. The method of any one of the claims 1-7, wherein the paperboard is a two-ply paperboard, wherein the first ply is a top ply and the second ply is a back ply.

10. The method of any one of the preceding claims, wherein the fibres of the paperboard are exclusively cellulose fibres.

11. The method of any one of the preceding claims, wherein no extruded or laminated plastic layer is provided on the part of the paperboard provided in step a) that is to be wetted and sealed.

12. The method of any one of the preceding claims, wherein the second ply further comprises microfibrillated cellulose (MFC).

13. Use of a paperboard in ultrasonic sealing, wherein the paperboard comprises a first ply and a second ply, wherein the second ply comprises chemical pulp and 20-70 wt% unbleached chemithermomechanical pulp (CTMP) by dry weight.

14. A method of forming a sealed package or container, wherein the method comprises the following steps:
i. providing a multi-ply paperboard comprising a first ply and a second ply, wherein the second ply comprises chemical pulp and at least 20 wt% unbleached pulp by dry weight;
ii. forming a package or container by folding the paperboard;
iii. wetting part of the first ply of the paperboard with water; and
iv. sealing the wetted part to a paperboard surface by ultrasonic sealing.

15. A package or container comprising the sealed paperboard according to any one of the claims 1-12.
